Europäisches Patentamt

European Patent Office

Office européen des brevets

(11) Veröffentlichungsnummer : **0 047 890**
**B1**

(12) # EUROPÄISCHE PATENTSCHRIFT

(45) Veröffentlichungstag der Patentschrift :
20.02.85

(51) Int. Cl.⁴ : **H 02 B   1/04**

(21) Anmeldenummer : 81106624.0

(22) Anmeldetag : 26.08.81

(54) **Anordnung zur Befestigung eines elektrischen Gerätes an einer Tragschiene.**

(30) Priorität : 12.09.80 SE 8006394

(43) Veröffentlichungstag der Anmeldung :
24.03.82 Patentblatt 82/12

(45) Bekanntmachung des Hinweises auf die Patenterteilung : 20.02.85 Patentblatt 85/08

(84) Benannte Vertragsstaaten :
AT CH DE FR GB LI

(56) Entgegenhaltungen :
DE-B- 1 070 719
DE-B- 1 283 318
FR-A- 2 443 789

(73) Patentinhaber : **ASEA AB**
**S-721 83 Västeras (SE)**

(72) Erfinder : **Larsson, Torvald, Dipl.-Ing.**
**Öja**
**S-740 47 Harbonäs (SE)**

(74) Vertreter : **Boecker, Joachim, Dr.-Ing.**
**Rathenauplatz 2-8**
**D-6000 Frankfurt a.M. 1 (DE)**

## Beschreibung

Die Erfindung betrifft eine Anordnung zur Befestigung eines elektrischen Gerätes an einer Tragschiene gemäß dem Oberbegriff des Anspruches 1. Eine solche Anordnung ist im wesentlichen bekannt aus der DE-B-1 070 719. Bei der Tragschiene handelt es sich vorzugsweise um eine Normschiene mit Hutprofil.

Es ist bereits bekannt, zur Befestigung eines elektrischen Gerätes an einer Tragschiene der genannten Art die Unterseite des Gerätes mit hakenförmigen Vorsprüngen zu versehen, welche die eine Längskante der Schiene umfassen, während ein am Gerät befestigter und von einer Druckfeder beeinflußter Schubriegel hinter die andere Längskante der Schiene greift (DE-B-2 337 352). Eine solche Ausführung ist verhältnismäßig teuer, da sie aus vielen verschiedenen Teilen besteht. Es ist auch bekannt, zum Eingriff mit der genannten anderen Längskante der Tragschiene eine sog. Plastikfeder in Form eines bügelähnlichen Hakens zu verwenden, die mit dem Unterteil des Gerätes in einem Stück gepreßt wird (DE-U-7 242 212). Diese Ausführung erfordert jedoch viel Platz und ist u. a. aus festigkeitstechnischen Gründen für größere Geräte weniger geeignet.

Bei der aus der DE-B-1 070 719 bekannten Anordnung zur Befestigung besteht das federnde Befestigungsglied aus Federdraht, der zu einem offenen rechteckigen Rahmen gebogen ist, wobei der Rahmen selbst V-förmig abgewinkelt ist. Bei den zu befestigenden Geräten handelt es sich um Reihenklemmen, und der genannte Federbügel wird in dem einen Vorsprung derart angeordnet, daß dieser Vorsprung über die Längskante der Schiene gegen den Druck der Feder geschoben und abgezogen werden kann. Die Belastbarkeit dieser Befestigung ist relativ gering, so daß diese Konstruktion nur für relativ kleine und leichte Geräte (Reihenklemmen) geeignet ist.

Aus der DE-B-1 283 318 ist eine andere Anordnung zur Befestigung von Geräten an einer Tragschiene bekannt, bei der eine besondere Halteplatte erforderlich ist, auf der zunächst das Gerät befestigt werden muß, um anschließend mit dieser Halteplatte an der Schiene befestigt zu werden. Das Befestigungsglied besteht bei dieser bekannten Anordung ebenfalls aus einem Bügel aus Federdraht, der so gebogen und angeordnet ist, daß er einerseits an der Halteplatte angreift und andererseits hinter die eine Längskante der Tragschiene greift. Bei dieser Anordnung ist nicht nur die zusätzliche Halteplatte erforderlich, sondern zum Aufsetzen des Gerätes auf die Tragschiene auch ein Werkzeug (Schraubenzieher) oder zumindest eine von Hand erfolgende, große Kraft erfordernde Verschiebung gegen die Federkraft.

Der Erfindung liegt die Aufgabe zugrunde, eine Anordnung der eingangs genannten Art zu entwickeln, die in ihrer Herstellung einfach ist, wenig Raum erfordert, zum Tragen relativ schwerer Geräte geeignet ist und ohne Hilfsmittel auf die Tragschiene aufgesetzt werden kann.

Zur Lösung dieser Aufgabe wird eine Anordnung der eingangs genannten Art vorgeschlagen, die erfindungsgemäß die im kennzeichnenden Teil des Anspruches 1 genannten Merkmale hat.

Vorteilhafte Weiterbildungen der Erfindung sind in den weiteren Ansprüchen genannt.

Die Anordnung gemäß der Erfindung ist verhältnismäßig billig, da sie aus einem einzigen Teil besteht, das außerdem einfach herzustellen und zu montieren ist. Das Befestigungsglied benötigt wenig Raum, und die Federung, die man durch die Lösung gemäß der Erfindung erzielen kann, ist im Verhältnis zur Größe des vorliegenden Gliedes groß. Das Befestigungsglied kann ferner ohne Schwierigkeiten derart ausgeführt werden, daß es bei einem an der Tragschiene montierten Gerät von der Vorderseite des Gerätes zugänglich ist, so daß das Gerät leicht von der Tragschiene gelöst werden kann. Zur Befestigung des Gerätes an der Tragschiene genügt ein einfaches Ausdrücken des Gerätes gegen die Tragschiene.

Anhand des in den Figuren gezeigten Ausführungsbeispiels soll die Erfindung näher erläutert werden. Es zeigen :

Figur 1 ein auf einer Tragschiene mit Hilfe einer Anordnung gemäß der Erfindung montiertes Gerät von hinten gesehen,

Figur 2 einen Schnitt durch den hinteren Teil des Gerätes längs der Linie A-A in Figur 1,

Figuren 3 und 4 zwei senkrecht zueinander liegende Ansichten eines Befestigungsgliedes zur Fixierung des Gerätes an der Tragschiene,

Figur 5 eine Ansicht des Befestigungsgliedes im abgewickelten Zustand (vor dem Biegen) von oben,

Figur 6 einen Schnitt durch das Befestigungsglied längs der Linie B-B in Figur 5,

Figur 7 einen Schnitt durch einen Gerätefuß mit montiertem Befestigungsglied längs der Linie C-C in Figur 2.

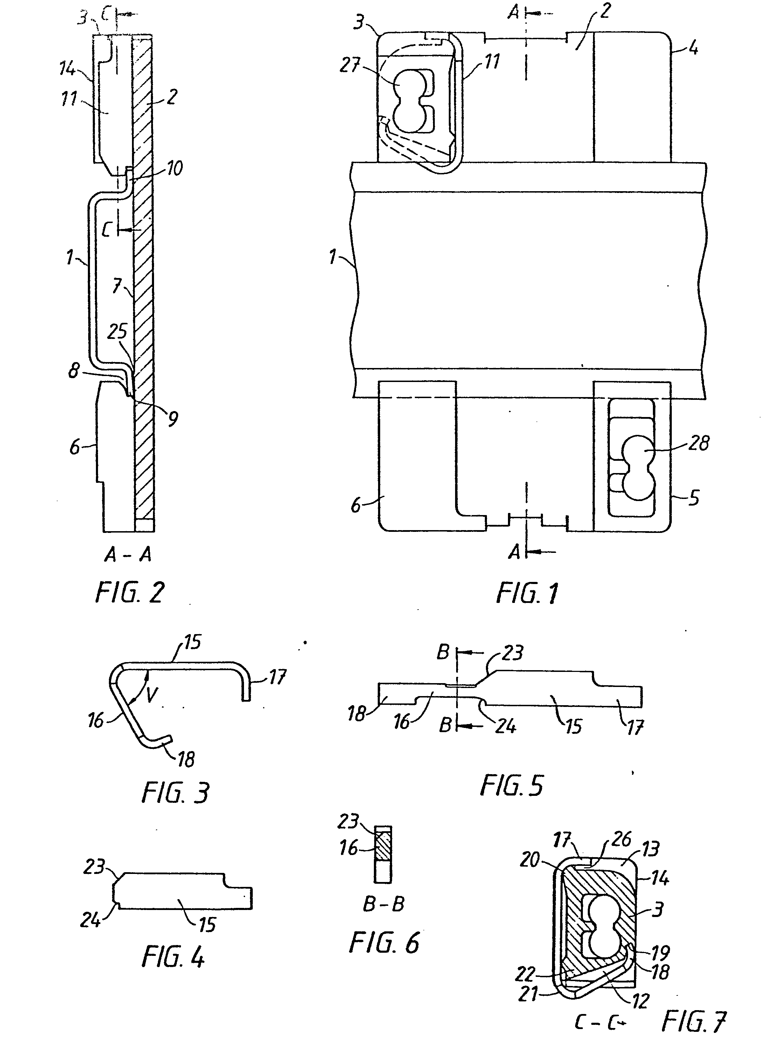

Die Figuren 1 und 2 zeigen, wie ein elektrisches Gerät, beispielsweise ein Relais oder ein Schütz, auf einer Tragschiene 1 befestigt ist. Zum Gerät gehört ein formgepreßter Kunststoffkörper, von dem nur das Unterteil 2 in den Figuren gezeigt ist. Der Kunststoffkörper ist mit vier Füßen 3, 4, 5, 6 an den Ecken der im wesentlichen rechteckigen Grundfläche 7 versehen. Die beiden Füße 5 und 6 haben an ihrer zur Schiene 1 gerichteten Seite keilförmige Aussparungen 8, in die hakenförmig die Längskante 9 der Schiene einzugreifen vermag. Der an der anderen Längskante 10 der Schiene liegende Gerätefuß 3 ist von einem aus federndem, korrosionsbeständigem Blech bestehenden Befestigungsglied 11 umschlossen, das hinter die Längskante 10 der Schiene 1 greift. Das Befestigungsglied 11 ist am Gerätefuß 3 in Aussparungen 12, 13 (Figur 7) fixiert, die von der Grundfläche 14 des Fußes überdeckt werden.

Das Befestigungsglied 11 ist als offener Bügel ausgebildet mit zwei im wesentlichen geraden Schenkeln 15 und 16 mit zur Öffnung des Bügels hin nach innen gebogenen Enden 17 und 18 (Figur 3). Der Winkel v zwischen den Bügelschenkeln 15 und 16 beträgt in dem gezeigten Ausführungsbeispiel 60°, doch kann der Bügel natürlich auch mit einem anderen Biegewinkel ausgeführt werden.

Das Bügelende 18 ist quer zur Längsrichtung der Trageschiene gerichtet und stützt sich an einer Anlagefläche 19 des Gerätefußes 3 ab (Figur 7). Das andere Bügelende 17 umschließt hakenförmig einen im Verhältnis zu der Ansatzfläche 19 diametral liegenden Kantenabschnitt 20 des Gerätefußes. Zwischen dem gebogenen Mittelteil 21 des Bügels 11 und dem benachbarten Kantenabschnitt 22 des Gerätefußes befindet sich ein gewisser Abstand, so daß das Mittelteil des Bügels die Möglichkeit hat, quer zur Längsrichtung der Trageschiene 1 herauszufedern.

Der eine Bügelschenkel 15 ist breiter als der andere Schenkel 16. Am Übergang zwischen den Bügelschenkeln hat die vom Gerät aus gesehen nach außen gerichtete Kante (Sehmalseite) des Bügels einen schrägen Übergang, der als Gleitfläche 23 dient, die bei der Montage des Gerätes mit der Längskante 10 der Schiene so zusammentrifft, daß das Gerät ohne Verwendung von Werkzeug an der Schiene 1 festgeklinkt werden kann. Die nach vorn, also zum Gerät gerichtete Kante des Bügels ist mit einem im Verhältnis zur Längskante 10 der Schiene schräggerichteten Anlageabschnitt 24 für die Schiene 1 versehen. Durch diese Ausführung in Kombination mit einer kleinen Erhöhung 25 auf der Grundfläche 7 des Gerätes am Gerätefuß 6 erreicht man eine spielfreie Klemmverbindung des Gerätes mit der Schiene.

Das Bügelende 17 erstreckt sich parallel mit der Längsrichtung der Schiene 1 in einem gewissen Abstand von der Mantelfläche des Gerätefußes 3. Mit Hilfe eines Schraubenziehers o. dgl., der von der Vorderseite des Gerätes in den Spalt 26 (Figur 7) zwischen dem Bügelende und dem Gerätefuß eingeführt werden kann, kann der Bügel 11 aus seiner die Schiene 10 hintergreifenden Lage weggehebelt werden, so daß das Gerät von der Schiene abgenommen werden kann.

Die beiden diametral zueinander liegenden Gerätefüße 3 und 5 sind mit Löchern 27 bzw. 28 für Befestigungsschrauben versehen, wodurch das Gerät auch auf einem Montageblech o. dgl. festgeschraubt werden kann.

**Ansprüche**

1. Anordnung zur Befestigung eines elektrischen Gerätes an einer Tragschiene (1), das an seiner zur Tragschiene gerichteten Grundfläche (7) auf jeder Seite der Tragschiene mindestens einen fußartigen Vorsprung (6, 3) hat, von denen der erste (6) die eine Längskante (9) der Tragschiene hakenförmig umgreift, während der zweite (3) ein zwischen der Grundfläche (7) des Gerätes und der Grundfläche (14) des Vorsprunges angeordnetes federndes Befestigungsglied (11) trägt, welches hinter die andere Längskante (10) der Tragschiene greift, und zu dessen Fixierung dieser Vorsprung (3) mit seitlichen Aussparungen versehen ist, dadurch gekennzeichnet, daß das Befestigungsglied (11) lediglich aus einem Streifen aus federndem Blech besteht, der als V-förmiger, offener Bügel ausgebildet ist und sich mit seinem ersten, nach innen gebogenen Ende (18) an einer Anlagefläche (19) des Vorsprunges (3) abstützt und dessen zweites Ende (17) einen der Anlagefläche (19) diametral gegenüberliegenden Kantenabschnitt (20) des Vorsprunges (3) hakenförmig umschließt, und daß die Seitenflächen des Bügels im wesentlichen senkrecht zur Grundfläche (7) des Gerätes gerichtet sind.

2. Anordnung nach Anspruch 1, dadurch gekennzeichnet, daß sich das zweite Ende (17) des Bügels im wesentlichen parallel zur Längsrichtung der Tragschiene (1) in einem solchen Abstand von der Mantelfläche des Vorsprunges (3) erstreckt, daß ein Werkzeug zum Lösen des Gerätes von der Tragschiene zwischen dem Bügelende (17) und dem Vorsprung (3) eingeführt werden kann.

3. Anordnung nach einem der vorhergehenden Ansprüche, dadurch gekennzeichnet, daß der Winkel (v) zwischen den beiden Schenkeln des Bügels (11) zwischen 40 und 80 Grad liegt.

4. Anordnung nach Anspruch 3, dadurch gekennzeichnet, daß die Bügelschenkel (15, 16) verschieden breit sind.

5. Anordnung nach einem der vorhergehenden Ansprüche, dadurch gekennzeichnet, daß die zur Tragschiene (1) gerichtete Kante des Befestigungsbügels am Übergang zwischen den Bügelschenkeln (15, 16) eine als Gleitfläche (23) dienende Abschrägung aufweist, die mit der zweiten Längskante (10) der Tragschiene zum Festklinken des Gerätes an der Tragschiene zusammenwirkt.

6. Anordnung nach einem der vorhergehenden Ansprüche, dadurch gekennzeichnet, daß die dem zu befestigenden Gerät Zu gerichtete Kante des Befestigungsbügels am Übergang zwischen den Bügelschenkeln (15, 16) mit einem im Verhältnis zu der zweiten Längskante (10) der Tragschiene schräggerichteten Anlageabschnitt (24) für die Tragschiene (1) versehen ist.

**Claims**

1. Arrangement for mounting an electric apparatus upon a supporting rail (1), which apparatus is provided on its basal surface (7) confronting the supporting rail with at least one foot-like projection (6, 3) on each side of the supporting rail, whereby the first projection (6) catches around one of the longitudinal edges (9) of the supporting rail in a hook-like manner, while the second projection (3) is provided with a springy fastening element (11) being arranged between the basal surface (7) of the apparatus and the basal surface (14) of said projection, whereby said fastening element (11) grips behind the other longitudinal edge (10) of the supporting rail, said projection (3) being provided with lateral recesses for fixing said fastening element (11), characterized in that the fastening element (11) is merely made of a single strip of spring steel sheet taking the form of a V-shaped open bow and resting with its first, inwardly bent end portion (18) against a butt face (19) of said projection (3), that the second end portion (17) surrounds in a hook-like manner an edge portion (20) of said projection (3) being located diametrically opposite of said butt face (19), and that the lateral faces of said bow extend substantually perpendicular to the basal surface (7) of the apparatus.

2. Arrangement according to claim 1, characterized in that said second end portion (17) of the bow extends substantually parallel with the longitudinal direction of the supporting rail (1) at such a distance from the lateral surface of said projection (3), that a toole for disengaging the apparatus from the supporting rail can be inserted between said end portion (19) of the bow and said projection (3).

3. Arrangement according to any of the preceding claims, characterized in that the angle (v) between the two legs of the bow (11) is between 40 and 80°.

4. Arrangement according to claim 3, characterized in that the legs (15, 16) of the bow are of different widths.

5. Arrangement according to any of the preceding claims, characterized in that the edge of the fastening bow which confronts the supporting rail (1) is provided with a chamfer at its transitional portion between the two legs (15, 16) of the bow which chamfer co-acts with the second longitudinal edge (10) of the supporting rail for engaging the apparatus with the supporting rail.

6. Arrangement according to any of the preceding claims, characterized in that the edge of the fastening bow which confronts the apparatus to be fastened is provided on its transitional portion between the legs (15, 16) of the bow with a butt portion (24) for the supporting rail (1) being inclined in relation to the second longitudinal edge (10) of the supporting rail.

**Revendications**

1. Dispositif pour fixer sur un rail de support (1) un appareil électrique possédant dans sa surface de base (7) dirigée vers le rail de support et de part et d'autre de ce dernier au moins un appendice (6, 3) de la forme d'une patte, parmi lesquels appendices le premier (6) enserre, à la manière d'un crochet, l'un (9) des bords longitudinaux du rail de support, alors que le second (3) porte un élément élastique de fixation (11) disposé entre la surface de base (7) de l'appareil et la surface de base (14) de l'appendice et qui attaque par l'arrière l'autre bord longitudinal (10) du rail de support et pour la fixation duquel élément élastique cet appendice (3) est pourvu d'ouvertures latérales, caractérisé par le fait que l'élément de fixation (11) est constitué uniquement par une bande de tôle élastique conformée comme un étrier ouvert en V et porte avec sa première extrémité (18) incurvée vers l'intérieur contre une surface d'appui (19) de l'appendice (3), alors que sa seconde extrémité (17) enserre, à la manière d'un crochet, une section d'arête (20) de l'appendice (3) diamétralement opposée à la surface d'appui, et que les surfaces latérales de l'étrier sont sensiblement perpendiculaires à la surface de base (7) de l'appareil.

2. Dispositif selon la revendication 1, caractérisé par le fait que la seconde extrémité (17) de l'étrier s'étend, pour l'essentiel, parallèlement à la direction longitudinale du rail de support (1), à une telle distance de la surface latérale de l'appendice (3) qu'un outil servant à détacher l'appareil du rail de support peut être introduit entre l'extrémité (17) de l'étrier et l'appendice (3).

3. Dispositif selon l'une des revendications précédentes, caractérisé par le fait que l'angle (v) entre les deux branches de l'étrier (11) se situe entre 40 et 80 degrés.

4. Dispositif selon la revendication 3, caractérisé par le fait que les branches de l'étrier (15, 16) ont des largeurs différentes.

5. Dispositif selon l'une des revendications précédentes, caractérisé par le fait que le bord de l'étrier de fixation, qui est dirigé vers le rail de support (1) comporte, au passage entre les branches (15, 16) de l'étrier, un biseau qui sert de surface de glissement (23), biseau qui coagit avec le second bord longitudinal (10) du rail de support pour l'encliquetage en position fixe de l'appareil sur le rail de support.

6. Dispositif selon l'une des revendications précédentes, caractérisé par le fait que le bord de l'étrier de fixation, qui est dirigé vers l'appareil à fixer est pourvu, au passage entre les branches (15, 16) de l'étrier, d'une section d'application (24) pour le rail de support (1), laquelle section d'application est dirigée obliquement par rapport au second bord longitudinal (10) du rail de support.

0 047 890

FIG. 2

A - A

FIG. 1

FIG. 3

FIG. 5

FIG. 4

FIG. 6

B - B

FIG. 7

C - C